# EUROPEAN PATENT APPLICATION

(11) **EP 1 530 139 A1**
(43) Date of publication of application: **11.05.2005**
(21) Application number: 03025242.3
(22) Date of filing: 05.11.2003
(51) Int. Cl.: G06F 17/60

(54) **Method and computer system for workflow management**

(71) Applicant: SAP Aktiengesellschaft, 69190 Walldorf (DE)
(72) Inventor: Herbert, Cedric, 06370 Mouans Sartoux (FR); Kilian-Kehr, Roger, 64291 Darmstadt (DE)

(57) **Abstract**

Method and computer system workflow management. A workflow engine (100) creates (410) workflow items (151, 152, 153). Each workflow item (151, 152, 153) has a self descriptive part (151', 152', 153') that specifies details for generating (420) a device independent representations (251) of a corresponding workflow item (151). A workflow manager (200) generates (420) the device independent representation (251) based on the self descriptive part (151').

## Description

### Field of the Invention

The present invention generally relates to electronic data processing, and more particularly, relates to methods, computer program products and systems for workflow management.

### Background of the Invention

In general, integrating mobile devices into workflow management needs adaptation of workflow application user interfaces to fit the capabilities of the various mobile devices. For example, typically the user interface (UI) of a workflow application that relates to vacation approval when executed on a desktop computer looks different from the corresponding UI on a personal digital assistant (PDA) or a mobile phone.

The publication "On Integrating Mobile Devices Into A Workflow Management Scenario" (Proc. 11th International Workshop on Database and Expert Systems Applications (DEXA 2000); Published by IEEE Computer Society, Los Alamitos, California, Page(s) 186-192) addresses this problem by proposing a Java Border Service Architecture (JBSA). A runtime analysis is applied to the presentation layer of a workflow application and its description in an abstract data representation in a specially designed XML dialect. A set of device-dependent XSL transformation rules is applied to the abstract description to transfer (render) the abstract description into a UI description suitable for a specific device. As part of the analysis, all user interface primitives (push buttons, text fields etc.), are identified at an operating system level by means of UI object hierarchy inspection. No semantic analysis is performed and thus no "valence" will be given to identified elements. Type and unique identifier of each user interface primitive is derived and registered to allow for later access to each GUI element. All results of the runtime analysis are assembled and form a "snapshot" in a well defined descriptive language.

This approach requires extensive runtime analysis of the presentation layer of a workflow application, which is time consuming. Further, complex transformation rules are needed to transform the abstract UI description layer into a device compliant description.

### Summary of the Invention

Based on the teaching of the above publication there is a need to improve the generation of workflow task user interfaces for execution of workflow tasks on multiple devices. Workflow tasks are usually parts of a workflow application and will also be referred to as workflow items, hereinafter.

This is achieved by a workflow management computer system according to claim 1. Further embodiments of the invention are a workflow management method according to claim 12 and a workflow management computer program product according to claim 21.

The computer system includes a workflow engine for creating workflow items. A workflow item has a self descriptive part that specifies details for generating a device independent representation of the respective workflow item. The generation of the device independent representation is performed by a workflow manager based on the self descriptive part.

By using self descriptive workflow items, the workflow manager can generate a functional description of the user interface that relates to the workflow item. A client device that connects to the workflow manager to retrieve the workflow item can transform the functional description in form of the device independent representation into a device specific representation. This device specific representation can be rendered into an appropriate user interface on the client device.

Self descriptive workflow items eliminate the need for extensive runtime analysis of the presentation layer of a workflow application, in order to generate a device specific UI of the workflow application.

The aspects of the invention will be realized and attained by means of the elements and combinations particularly pointed out in the appended claims. Also, the described combination of the features of the invention is not be understood as a limitation, and all the features can be combined in other constellations without departing from the spirit of the invention. It is to be understood that both the foregoing general description and the following detailed description are exemplary and explanatory only and are not restrictive of the invention as described.

### Brief Description of the Drawings

- FIG. 1: is a simplified block diagram of a computer system for workflow management including a workflow engine and a workflow manager according to the present invention;
- FIG. 2: shows details of the workflow manager using a rule set;
- FIG. 3: shows the workflow manager including a notifying component; and
- FIG. 4: is a simplified flow chart of a method for performing workflow management according to the present invention.

### Detailed Description of the Invention

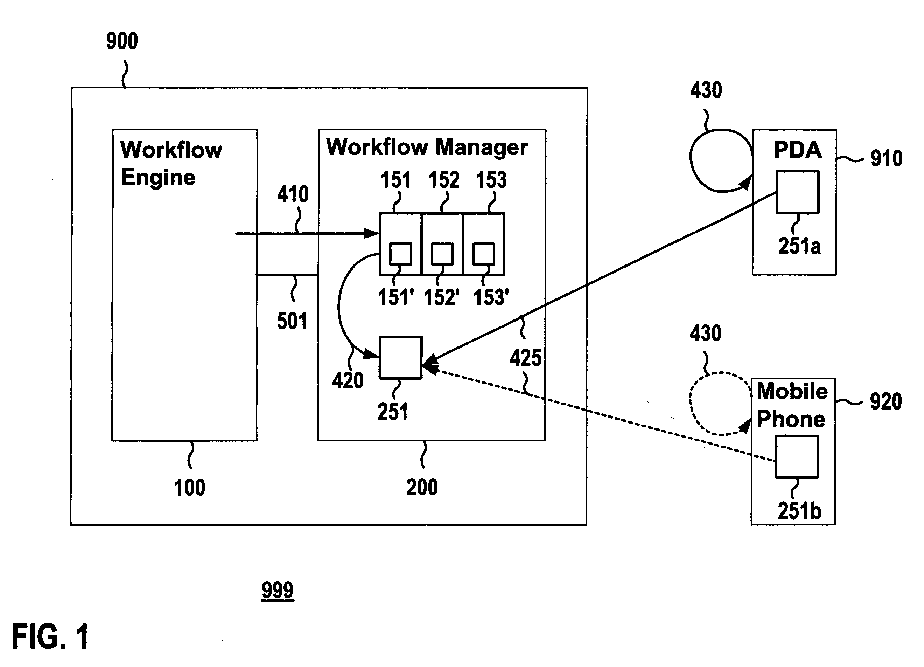

FIG. 1 is a simplified block diagram of a computer system 999 for workflow management including a workflow engine 100 and a workflow manager 200 according to the present invention. The workflow engine 100 and the workflow manager 200 can communicate over an interface 501 and can both be run by one or more computers 900. The computer system 999 can include further computing devices 910, 920, such as client devices like mobile phones, PDAs, desktop computers, laptop computers, etc. These devices can communicate with the workflow computer 900 over a network, such as a local area network (LAN), a wide area network (WAN) or the Internet. In the case of using mobile devices, at least parts of the network can be operated by wireless technology.

The workflow engine 100 creates workflow items (151, 152, 153). For example, when a user of the computer system 999 applies for vacation the workflow engine 100 creates a corresponding workflow item for the user's manager. The work flow item represents a small application that allows the manager to approve or reject the vacation request. Each workflow item 151, 152, 153 has a self descriptive part 151', 152', 153' that specifies details for generating a device independent representation 251 of the workflow item 151. The self descriptive part 151', 152', 153' includes meta data for defining at least a part of the semantics of the workflow item 151, 152, 153. In the example above, the workflow item can have a generic yes/no field that is used for approval or rejection by the manager.

The workflow manager 200 can generate the device independent representations 251 of the workflow items 151 by using the self-descriptive part 151'. The device independent representations 251 are then transformed 430 into device specific representations 251a, 251b.

Usually, the transformation 430 is performed by the client device 910 (e.g., by a browser of the client device) that is used to access 425 the device independent representations 251 of the workflow item 151 (illustrated by solid arrows 425, 430). Alternatively, the transformation 430 can be performed by further client devices 920 (illustrated by dashed arrows 425, 430). Alternatively, the transformation 430 can be done by the workflow manager 200.

The workflow manager 200 can serve as a repository for a user to access workflow tasks from various devices, such as, PDA, desktop, mobile phone, etc. For example, when the manager uses a mobile phone for executing the workflow item the user interface of the workflow item looks typically quite different from what it looks like on a desktop PC or on a PDA.

Each of the client devices interprets the device independent representation 251 in a specific way to meet the restrictions or capabilities (e.g., display area) of the device. Therefore, the device dependent representations 251a, 251b in general will not be equal.

For example, workflow parameters in the workflow engine 100 are basic character strings. Special characters and/or keywords can be defined as specific workflow parameters, to convey semantic information (metadata) about the workflow item to the workflow manager 200 where the information can be further processed.

The following example illustrates the implementation of a self-descriptive workflow item 151'.

Assume a travel planning workflow scenario, where the end user should receive a workflow item that allows him/her to choose how to be identified at the airport for his/her electronic ticket. For example, possible choices can be credit card number, ID card or passport.

The workflow engine 100 of the computer system 900 enriches the workflow item 151 by a self-descriptive parameter 151' (e.g., META_IDENTIFIED_BY parameter) that provides the information needed by the client device for generating an appropriate user interface. The self-descriptive parameter 151' for the travel planning workflow item can be defined as:
META_IDENTIFIED_BY="Select1(VisaCard|IDCard|Passport)"

For example, the workflow manager 200 can then process all self-descriptive parameters starting with 'META'. Ignoring these parameters would deliver the same result as not using the self-descriptive part of the workflow item.

For example, when the workflow manager 200 processes the META_IDENTIFIED_BY parameter, 'Select1' can be identified as a keyword for generating a drop-down box. From this parameter, the device independent representation 251 can be generated as the following XML code:

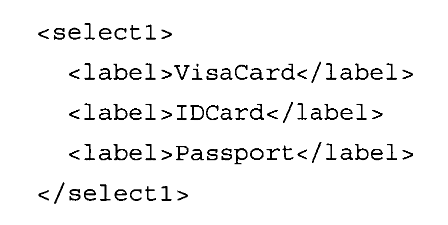

For example, the XML code is compliant with the x-forms standard of W3C(http://www.w3.org/MarkUp/Forms/).

In turn, the client device 910, 920 (e.g., desktop, PDA, laptop, mobile phone) can then retrieve this code over a HTTP connection.

The client devices 910, 920 run generic programs that interpret XML tags. For example, some client devices, such as PDAs and mobile phones have embedded browsers, such as HTML- or WML-browsers. To interpret the device independent representation 251 the generic program can be implemented as a browser that is able to render the device independent representation 251 (e.g., x-forms XML) into a browser compatible device specific representation 251a, 251b. In an alternative' implementation a Java Server Page (JSP) parses the content of the device independent representation 251 at the client device and renders a corresponding device specific representation (e.g., a HTML page) 251a, 251b. The 'generic program' (e.g., JSP or browser) knows how to render because the device independent representation 251 includes all necessary information. References on client side generic program implementations can be found on the W3C x-forms web site at http://www.w3.org/MarkUp/Forms/, chapter "XForms Implementations".

In the above XML example the <select1> tag is rendered as a drop-down box.

A workflow manager according to the invention generates device-independent representations of workflow items based on a self-descriptive part of the workflow items. These device-independent representations can be directly transformed into device specific representations for a variety of client devices. No complex runtime analysis is required. Further, no complex transformation rules are needed to transform the abstract UI description layer into a device compliant description because this is automatically achieved by generic programs as describe above.

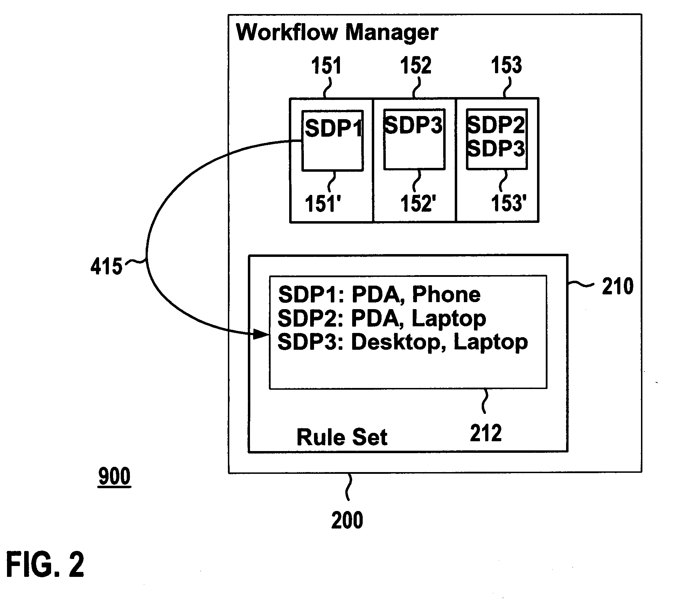

FIG. 2 shows details of the workflow manager 200 having a rule set 210.

The rule set 210 includes representation rules 212 for evaluating 415 whether a specific self descriptive workflow item 151 is suitable for a specific client device 910, 920.

In the example of FIG. 2, the representation rules 212 include rules to check the self-descriptive parts 151', 152', 153' for the existence of self-descriptive parameters SDP1, SDP2, SDP3. The rules 212 indicate that a workflow item that includes SDP1 is only suitable for a PDA or a mobile phone. This may be the case when the workflow item is part of a pure mobile scenario where it does not make sense to execute the workflow item on a non-mobile device. Further, a workflow item that includes SDP2 is suitable for a PDA or a laptop but not for a mobile phone. For example, the required display area for the corresponding UI may be too large for a mobile phone display. Further, a workflow item that includes SDP3 is suitable for a desktop computer or a laptop but not for the mobile devices. For example, the required computing power for executing the workflow item may be too large for mobile devices.

In this example, the workflow manager evaluates 415 that the first workflow item including SDP1 is only suitable for PDAs and mobile phones. The second workflow item 152 including SDP3 is only suitable for desktop computers or laptops. The third workflow item SDP3 is suitable for PDAs, desktop computers or laptops. The rules can equally be defined for device categories and specific devices.

When a device 910, 920 connects to the workflow manager 200, the workflow manager 200 detects the device and can determine the meaningful workflow items for the device/device category. The rule set 210 can thus be used for filtering the self descriptive workflow items 151, 152, 153 to allow only specific tasks in dependence of the capabilities of the corresponding client device 910, 920.

The rule set 210 can be enhanced by user specific rules so that the filtering can be performed also in response to characteristics defined by the user. For example, a user might add user specific rules to prevent his/her particular mobile device from retrieving workflow items having a low priority in order to save these items to be processed later with a desktop computer in the office.

An example of a rule for avoiding large workflow items being sent to devices with a small display area can be implemented like:
If (WorkflowItem.getSize() <= RequestingDevice.getMaxSize()) return WorkflowItem;

The adaptation to the corresponding UI will be done automatically, as the client device gets the device-independent XML file format, and uses one of the previously described generic programs.

The workflow manager 200 can then mark or flag the workflow items or their device independent representations according to the result of the evaluation 415. Dependent on the marking only suitable workflow item representations are retrieved from the workflow manager 200 by the corresponding client devices, whereas, in a conventional workflow system a client device would try to retrieve all of the items for its user.

The rules of the rule set 210 can be set up to reflect a corporate policy on the one hand and individual tuning on the other hand. In other words, a subset of the rules are set as a framework that is valid for any user. For example, a company might want to change the size of the workflow items that a client device might receive for reasons, such as, deactivating certain classes of devices for security reasons, etc.

Within the framework a user can define rules to reflect a user policy. The user policy is a personal tuning and applies further user-specific restrictions to what the corporate policy allows.

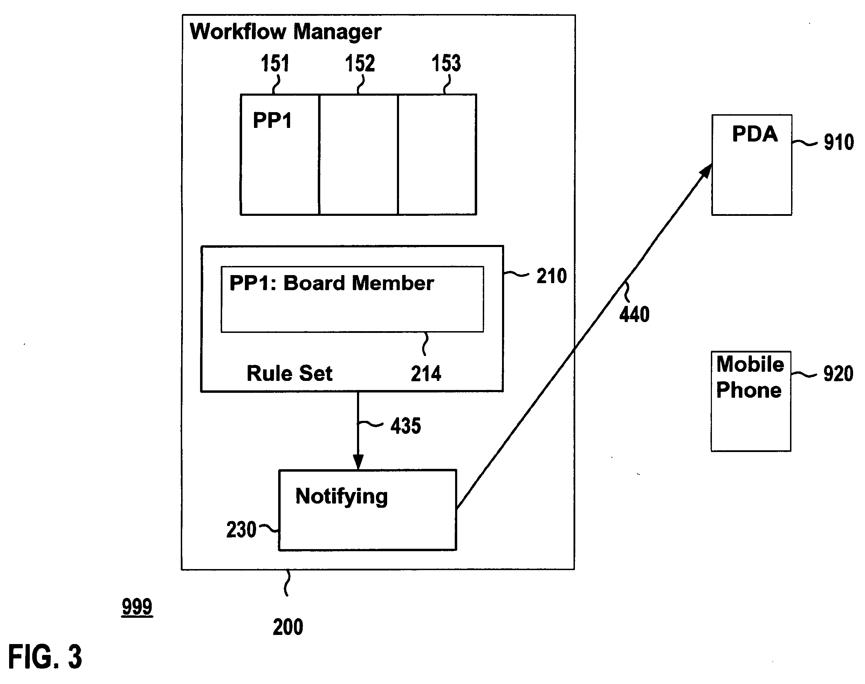

FIG. 3 shows the workflow manager 200 including a notifying component 230.

The workflow manager 200 receives the self-descriptive workflow items from the workflow engine 100 (cf. FIG. 1) and makes the workflow items available in an inbox for a particular user.

The rule set 210 can further include notification rules 214 that, when applied to the workflow items, can request 435 from a notification component 230 of the workflow manager 200 to notify 440 the specific client device 910, and, thereby, notify the user of the client device 910. For example, the notification component 230 can use SMS messages, WML pages or similar formats for notifying 440.

As the representation rules 212 (cf. FIG. 2), the notification rules 214 can depend on workflow item parameters, such as a priority parameter PP1 for board member workflow items. The priority parameter PP1 included in a workflow item 151 can then trigger an alert that is sent 440 proactively from the workflow manager as a notification to the corresponding device 910 of the affected user.

In one implementation, the user can configure or customize the notification rules 414 by, for example, manipulating parameters of a corresponding workflow user profile. For example, the user may insert or adjust a rule for suppressing notification under specific conditions, such as: no alerts over the weekends.

The user may also define rules for automatic workflow execution. For example, if a department has a rule that vacation of up to two days will always be approved, a rule can be set up that checks a vacation request workflow item for the number of vacation days. In case the number is less than 3, the workflow item will be automatically processed by the workflow manager 200 and a corresponding notification is sent to the approving manager to inform about the workflow item execution.

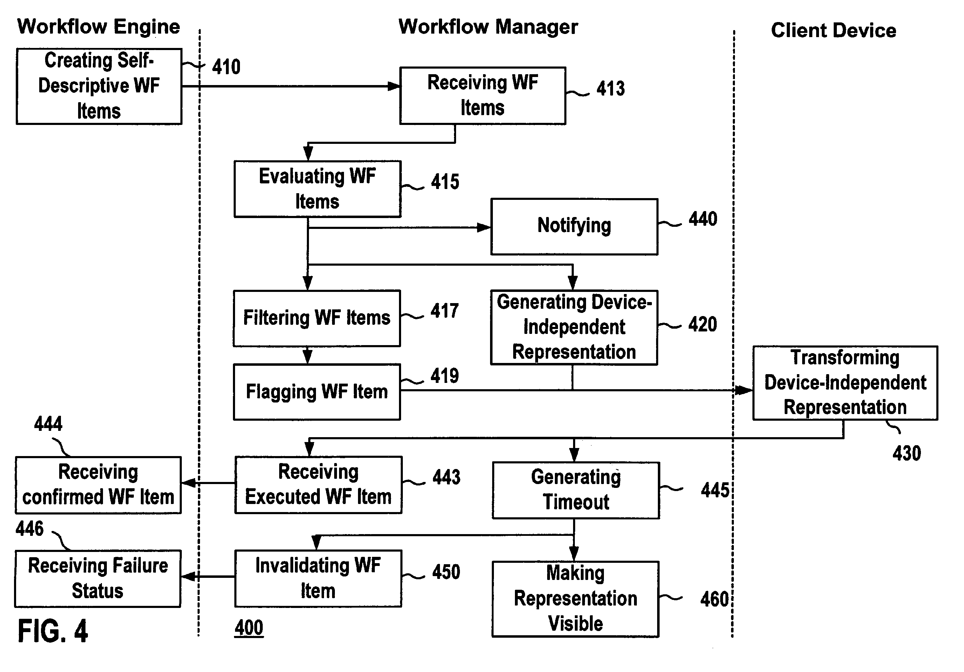

FIG. 4 is a simplified flow chart of a method 400 for performing workflow management according to one implementation of the present invention. In other implementations, some method steps can be omitted or can also be performed in a different order.

The flowchart illustrates which method steps are executed by which component of the computer system 999. The components workflow engine, workflow manager and client device are separated by dashed lines. The various steps can be implemented as described in the description of FIGs. 1 to 3.

As a response to applications that trigger a workflow, the workflow engine creates 410 self-descriptive workflow items.

These workflow items are then received 413 by the workflow manager and placed in a workflow inbox that belongs to a user who is the recipient of the workflow item.

The workflow manager 200 then evaluates 415 the workflow items by using a rule set 210 (cf. FIGs. 2, 3) that is applied to the self-descriptive part of the workflow item and/or to the workflow item as a whole.

In some cases, such as high priority workflow items, the evaluation 415 can cause the workflow manager to notify 440 the user of the client device.

In some cases, for example, when a client device has insufficient capabilities for executing the workflow item, the evaluation 415 results in filtering 417 the workflow items to keep only those that are suitable for the client device. The workflow items can be flagged 419 to reflect the filtering result.

Based on the self-descriptive part of the workflow items, the workflow manager generates 420 a device-independent representation of each workflow item.

When the client device connects to the workflow manager it retrieves the corresponding device-independent representation. Advantageously, only those representations that are flagged as meaningful for the device are retrieved.

The client device then transforms 430 the device-independent representation into a device-specific representation (UI) by using a generic program, such as a browser.

When the device-specific representation has been executed by the client device, the executed workflow item is received 443 by the workflow manager and the workflow engine receives 444 a corresponding confirmation.

When the client device does not respond within a predefined time period, the workflow manager can generate 445 a timeout. For example, for timeout generation the workflow manager launches a timer for each workflow item when retrieved by a client device. The timeout can cause the workflow manager to invalidate 450 the workflow item and to return the workflow item to the workflow engine where it is received 446 with a failure status.

The timeout generation 445 can also cause the workflow manager to make 460 the device independent representation of the workflow item visible again so that a further client device can retrieve the workflow item.

The further client device may belong to the same user. It may also belong to a further user who has a similar role as the user and who is also in a position to execute the workflow item. Information about substitute users can be stored in a workflow user profile or can be dynamically determined by user-to-role assignments by selecting the further user from a list of users who are assigned to the same role as the original recipient.

Embodiments of the invention can be implemented in digital electronic circuitry, or in computer hardware, firmware, software, or in combinations of them. The invention can be implemented as an workflow management computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. An workflow management computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A computer system (999) for workflow management comprising:
a workflow engine (100) for creating (410) workflow items (151, 152, 153); and
a workflow manager (200) for generating (420) device independent representations (251) of the workflow items (151, 152, 153);
**characterized in that**
a workflow item (151, 152, 153) has a self descriptive part (151', 152', 153') that specifies details for generating (420) the corresponding device independent representation (251).

2. The computer system of claim 1, where the self descriptive part (151', 152', 153') comprises meta data for defining at least a part of the semantics of the workflow item (151, 152, 153).

3. The computer system of claim 1 or 2, further comprising:
a client device (910, 920) for transforming (430) the device independent representation (251) into a device specific representation (251a, 251b).

4. The computer system of claim 3, where the client device (910, 920) is a mobile device.

5. The computer system of claim 3 or 4, where the client device (910, 920) uses a generic program for transforming (430).

6. The computer system of any one of the previous claims, where the workflow manager (200) has a rule set (210) comprising representation rules (212) for evaluating (415) whether a specific self descriptive workflow item (151) is suitable for a specific client device (910, 920).

7. The computer system of claim 6, where the specific client device (910) is configured to retrieve the corresponding self-descriptive representation (251) of the specific workflow item (151).

8. The computer system of claim 6 or 7, further comprising:
a notification component (230) for notifying (440) the specific client device (910) if requested by notification rules (214) of the rule set (210).

9. The computer system of any one of the claims 6 to 8, where the rule set (210) comprises further rules to suppress the notifying (440) under specific conditions.

10. The computer system of claim 8, where the notification component (230) uses a SMS message for notifying (440).

11. The computer system of claim 8, where the notification component (230) uses a WML page for notifying (440).

12. The computer system of any one of the previous claims, where the workflow manager (200) is configured to invalidate (450) the specific workflow item (151) when a timeout indicates that the specific client device (910) did not respond within a predefined time period.

13. A computer implemented workflow management method (400) comprising the steps of:
receiving (413) workflow items (151, 152, 153), wherein a workflow item (151, 152, 153) has a self descriptive part (151', 152', 153') specifying details for a device independent representation (251) of the respective workflow item (151); and
generating (420) the device independent representation (251) by using the self descriptive part (151'),' the device independent representation (251) being a base for transformation into a device specific representation (251a, 251b).

14. The method of claim 13, where the self descriptive parts (151', 152', 153') comprise meta data for defining at least a part of the semantics of the corresponding workflow items (151, 152, 153).

15. The method of claim 13 or 14, comprising the further step:
evaluating (415) whether a specific self descriptive workflow item (151) is suitable for a specific client device (910, 920) by applying representation rules (212) to the self descriptive part (151').

16. The method of claim 15, comprising the further step:
notifying (440) the specific client device (910) if requested by notification rules (214).

17. The method of claim 16, where the notifying (440) step sends a SMS message to the specific client device (910).

18. The method of claim 16, the notifying (440) step sends a WML page to the specific client device (910).

19. The method of any one of the claims 13 to 18, comprising the further step:
invalidating (450) the specific workflow item (151) when a timeout indicates that the specific client device (910) did not respond within a predefined time period.

20. The method of claim 19, comprising the further step:
making (460) the device independent representation (251) of the specific workflow item (151) visible to a suitable further client device (920) after the timeout.

21. A computer program product for workflow management comprising a plurality of instructions that when loaded into a memory of a computer system (999) cause at least one processor of the computer system (999) to execute the steps of any one of the claims 13 to 20.
